# EUROPEAN PATENT APPLICATION

(11) **EP 3 100 906 A1**
(43) Date of publication of application: **07.12.2016**
(21) Application number: 15170830.2
(22) Date of filing: 05.06.2015
(51) Int. Cl.: B60N 2/64, B60N 2/66, B60N 2/44

(54) **SHOULDER ADJUSTER**

(71) Applicant: Schukra Gerätebau GmbH, 2560 Berndorf (AT)
(72) Inventor: Schmitz, Daniel, 90518 Altdorf (DE); Hörber, Gerhard, 90461 Nürnberg (DE); Aksu, Tahir, 90482 Nürnberg (DE); Kalmutzki, Martin, 91126 Schwabach (DE)
(74) Representative: Banzer, Hans-Jörg

(57) **Abstract**

A shoulder adjuster (110) for mounting in a back rest of a seat comprises a first support structure (111) and a second support structure (112) and a pivot element (120). The pivot element (120) is configured to enable tilting (199) of the first support structure (111) with respect to the second support structure (112).

## Description

### TECHNICAL FIELD

Various embodiments of the invention relate to a shoulder adjuster for mounting in a backrest of a seat. In particular, various embodiments relate to a shoulder adjuster which comprises a pivot element that is configured to enable tilting of a first support structure of the shoulder adjuster with respect to a second support structure of the shoulder adjuster.

### BACKGROUND

WO 2006/069764 A1 discloses a seat element for a seat system that comprises an arching element as shoulder adjuster. Such a shoulder adjuster comprising the arching element can have certain drawbacks and limitations. E.g., it may be difficult to implement a continuous adaptation of the ergonomic shape of shoulder adjuster by the arching. I.e., it may not be possible or only possible to a limited degree to continuously actuate the shoulder adjuster comprising the arching element.

### SUMMARY

Therefore, a need exists for advanced shoulder adjusters for mounting in a backrest of a seat. In particular, a need exists for shoulder adjusters which provide, both, advanced ergonomics and the possibility of continuous actuation.

This need is met by the features of the independent claim. The dependent claims define embodiments.

According to an aspect, a shoulder adjuster for mounting in a backrest of a seat is provided. The shoulder adjuster comprises a first support structure and a second support structure. The shoulder adjuster further comprises a pivot element configured to enable tilting of the first support structure with respect to the second support structure.

E.g., the first support structure and/or the second support structure can be plate-shaped. E.g., the first support structure and/or the second support structure can be made of plastic. E.g., the first support structure can be a shoulder support plate. E.g., the second support structure can be a lumbar support plate. E.g., the first support structure may be movably mounted with respect to the backrest of the seat and with respect to the second support structure. It may be possible to move the first support structure between a rest position and a tilt position by said tilting. The pivot element may be a resilient element which returns the first support structure to the rest position if no force is applied.

By providing the first support structure movable, in particular tiltable with respect to the second support structure, it is possible to implement a reliable and effective shoulder adjuster. In particular, it may be possible to continuously actuate the pivot element such that the degree of tilting of the first support structure with respect to the second support structure can be continuously adjusted; i.e., a tilting angle may be continuously adjustable.

E.g., the pivot element can comprise an inflection portion. The inflection portion may be disposed in between the first support structure and the second support structure. Thus, when tilting the first support structure with respect to the second support structure, it is possible that the inflection portion shows a change of curvature of its shape. In this respect, it is possible that the inflection portion is made of an elastic material. It is possible that the inflection portion is configured to enable the tilting by flexible deformation of the elastic material. Thereby, a material-induced flexibility of the inflection portion may be provided. E.g., the inflection portion can be made of plastic. By implementing the pivot element as the inflection portion, a simple and reliable tilting of the first support structure with respect to the second support structure can be achieved. A number of required parts may be small.

E.g., the inflection portion can comprise one or more bridges. A first end of each one of the one or more bridges may be attached to the first support structure having the plate shaped. A second end of each one of the one or more flexible bridges may be attached to the second support structure having the plate shaped. By implementing the inflection portion as the one or more bridges, a shape-induced flexibility of the inflection portion can be provided. It is possible that the shape-induced flexibility of the inflection portion adds to the material-induced flexibility of the inflection portion. By providing the one or more bridges, the amount of material that is required to deform when tilting the first support structure with respect to the second support structure can be reduced; thereby, a resistance in said tilting can be reduced. This enables efficient and easy tilting. Only comparably small forces may be required for said tilting.

E.g., it is possible that a thickness of the inflection portion is smaller than a thickness of the first support structure and/or of the second support structure. By providing the inflection portion having a comparably small thickness, it is possible to further increase the shape-induced flexibility thereof.

E.g., it is possible that the first support structure, the second support structure, and the inflection portion are integrally formed. E.g., it is possible that the first support structure, the second support structure, and the inflection portion are formed of the same material. Thereby, it becomes possible to implement in an efficient production process for the shoulder adjuster; e.g., a one-step injection mold process is conceivable.

It is also possible that the first support structure, the second support structure, and the inflection portion are formed as separate pieces. E.g., the first support structure can be a first plate and the second support structure can be a distinct second plate.

It is possible that the pivot element comprises a hinge. E.g., the hinge may be mounted to, both, the first support structure and the second support structure. By implementing the pivot element as the hinge, it is possible to provide durable and fail-safe operation of the shoulder adjuster.

The shoulder adjuster may further comprise an actuation element. The actuation element may be configured to cause the tilting of the first support structure with respect to the second support structure by actuating the first support structure; this may move the first support structure out of the rest position into the tilt position.

E.g., the actuation element may be attached to the first support structure. Alternatively or additionally, the actuation element may be attached to the second support structure.

E.g., the actuation element may be manually operable, e.g., by means of a drive shaft that can be operated by a user of the seat by turning a corresponding knob arranged at the exterior of the seat. Alternatively or additionally, it is possible that the actuation element is automatically operable. In this regard, it is possible that the shoulder adjuster comprises an electric motor.

Generally, the actuation element can take various forms. E.g., it is possible that the actuation element comprises a pneumatic bladder. By operating the actuation element, it is then possible to fill the pneumatic bladder with gas to expand the pneumatic bladder; or release gas from the pneumatic bladder to shrink the pneumatic bladder; e.g., by means of a venting valve. E.g., and expansion (contraction) of the pneumatic bladder can cause an increased (decreased) tilting angle of the first support structure with respect to the second support structure.

It is also possible that the actuation element comprises an electromechanical actuator. E.g., the electromechanical actuator can comprise a movable element that pushes and/or pulls the first support structure to enable the tilting.

In some embodiments, it is possible that the actuation element comprises a single actuator such as the pneumatic bladder or the electromechanical actuator. In various embodiments, it is also possible that the action element comprises a plurality of actuators. It is possible that by sequentially activating the plurality of actuators, a massage functionality in a shoulder region of a user is achieved by a controlled active movement. E.g., the shoulder adjuster may comprise a processor which is configured to sequentially activate the plurality of actuators. E.g., it is possible that the processor is configured to select between a first temporal sequence of said sequentially activating the plurality of actuators and a second temporal sequence of said sequentially activating the plurality of actuators, e.g., depending on control data that is indicative of a user input. Thereby, user-defined massage functionality may be provided.

In some embodiments, the shoulder adjuster may comprise at least one massage actuator may be attached to a front side of the first support structure. E.g., the at least one massage actuator may be implemented by at least one mechanical actuator. A massage functionality in a shoulder region of a user is achieved by a controlled operation of the at least one massage actuator. A strength or user experience of the massage functionality may be further adjusted by controlling a tilting angle of the tilting of the first support structure with respect to the second support structure. E.g., a larger (smaller) tilt angle may correspond to a stronger (weaker) massage experience.

E.g., it is possible that the shoulder adjuster further comprises a resilient element which moves the first support structure into a predefined position, e.g., the rest position if the actuation element is not operated. E.g., the resilient element can be implemented by a spring or the like. The resilient element may be implemented by the pivot element.

The shoulder adjuster may further comprise a side element. The side element may be fixedly coupled to the second support structure and may be configured to fixedly couple the shoulder adjuster to the backrest at one or more fixation points. E.g., the side element may be implemented by one or more guide wires. The side element can be an upper side element, a lower side element, a left side element, and/or a right side element. It is possible that the side element connects to a frame or framing element of the backrest of the seat.

The shoulder adjuster may further comprise a stop structure. The stop structure may be configured to limit the tilting of the first support structure with respect to the second support structure. E.g., the stop structure may be plate-shaped. It is possible that the stop structure is arranged within a range of tilting enabled by the pivot element; then the stop structure may engage with the first support structure in the rest position.

The actuation element and the stop structure may be fixedly coupled to the side element. Thereby, it becomes possible to implement the first support structure movable with respect to the second support structure and the backrest. Then, it becomes possible to provide the particularly beneficial ergonomic shape of the shoulder adjuster.

E.g., it is possible that the shoulder adjuster further comprises a lumbar support device attached to the second support structure. By providing the lumbar support device attached to the second support structure, it is possible to add functionality to the shoulder adjuster. Generally, it is possible that the second support structure and/or the lumbar support device are dimensioned such that they extend in a region of the backrest of the seat configured to be in contact with a spine region of the back of the user.

E.g., it is possible that the shoulder adjuster further comprises a translational element. The translational element may be configured to enable translational movement of the first support structure with respect to the second support structure. By providing the translational element it may be possible to adjust the first support structure to different users; i.e., linearly displace the first support structure such that the first support structure is arranged in a vicinity of a shoulder region of the user. Where additional massage functionality is provided, this may be used to adjust the ergonomics of the massage functionality to the physiognomy of the user.

According to a further aspect, a backrest of a seat is provided. The backrest of the seat comprises the shoulder adjuster according to a further aspect.

E.g., the seat may be a seat of a vehicle such as a car or a truck. E.g., the seat may be a seat of an air plane or a train.

For such a backrest effects may be obtained that are comparable to the effects that may be obtained for the shoulder adjuster according to a further aspect.

It is to be understood that the features mentioned above and those yet to be explained below may be used not only in the respective combinations indicated, but also in other combinations or in isolation without departing from the scope of the invention.

### BRIEF DESCRIPTION OF THE DRAWINGS

The foregoing and additional features and effects of the invention will become apparent from the following detailed description when read in conjunction with the accompanying drawings, in which like reference numerals refer to like elements.
Fig. 1A is a schematic perspective view of a seat having a backrest in which a shoulder adjuster according to various embodiments is mounted.
Fig. 1B is a schematic perspective view of a seat having a backrest in which a shoulder adjuster according to various embodiments is mounted.
Fig. 2 is a schematic perspective view of the shoulder adjuster of Fig. 1B at greater detail, wherein the shoulder adjuster has an inflection portion implementing a pivot element.
Fig. 3A is a schematic side view of the shoulder adjuster of Fig. 2 at greater detail, wherein the shoulder adjuster comprises a pneumatic bladder implementing an actuation element.
Fig. 3B is a schematic side view of a shoulder adjuster according to various embodiments, wherein the shoulder adjuster comprises an electromechanical actuator implementing the actuation element.
Fig. 4 is a low-detail schematic side view of the shoulder adjuster of Fig. 2 in a rest position.
Fig. 5 is a low-detail schematic side view of the shoulder adjuster of Fig. 2 in a tilt position.
Fig. 6 is a schematic front view of the shoulder adjuster of Fig. 2 at greater detail, wherein the shoulder adjuster comprises a guide wire implementing a side element for mounting the shoulder adjuster in the backrest of the seat.
Fig. 7 is a schematic front view of a shoulder adjuster according to various embodiments, wherein a hinge implements the pivot element.
Fig. 8 is a schematic front view of a shoulder adjuster according to various embodiments, wherein a hinge implements the pivot element.

### DETAILED DESCRIPTION

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling.

Hereinafter, various techniques with respect to a shoulder adjuster comprising a tiltable support structure are explained.

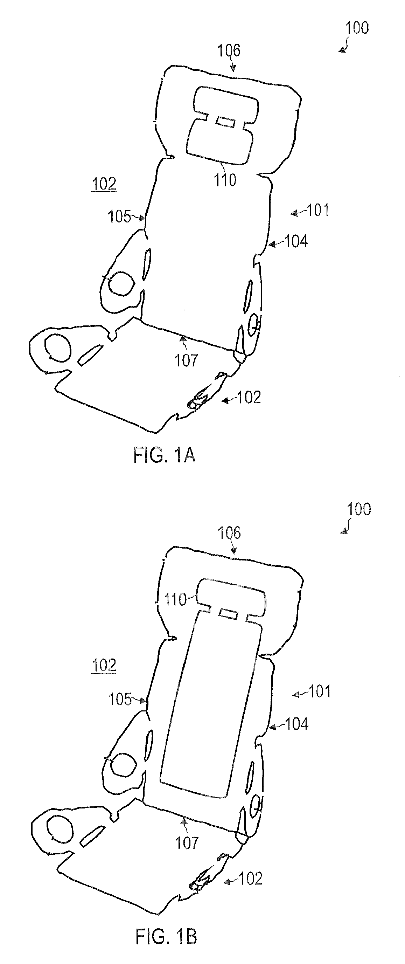

In Figs. 1A and 1B, aspects of mounting a shoulder adjuster in a backrest of a seat are illustrated.

Fig. 1A shows a seat 100, e.g., a seat 100 for a vehicle. The seat 100 comprises a backrest 101. Sometimes, the backrest 101 is also referred to as squab. The seat 100 has a front side 102 which is configured to be adjacent to a user of the seat 100 during operation. In the perspective of Fig. 1A, a back side 103 of the seat 100 is hidden. A left side 104 and a right side 105 of the seat 100 define a left-right direction. An upper side 106 and a lower side 107 of the seat 100 define a up-down direction. During operation, the upper side 106 is adjacent to a head of the user, the lower side 107 is adjacent to the feet of the user.

The shoulder adjuster 110 is mounted in the backrest 101. The shoulder adjuster 110 extends along the up-down direction of the backrest 101, i.e., the long side of the backrest 101. The dimensions and the arrangement of the shoulder adjuster 110 are such that the shoulder adjuster 110 is arranged in an area of the backrest 101 configured to be adjacent to a shoulder of a user of the seat 100.

Fig. 1B shows a seat 100, e.g., a seat 100 for a vehicle. A shoulder adjuster 110 is mounted in a backrest 101 of the seat 100 Here, the dimensions and the arrangement of the shoulder adjuster 110 are such that the shoulder adjuster 110 is positioned in the area of the backrest 101 configured to be adjacent to the shoulders of the user of the seat 100, as well as in a further area of the backrest 101 configured to be adjacent to a spine region of the back of the user. In the scenario of Fig. 1B, the shoulder adjuster 100 substantially extends along the entire length backrest 101. Generally, it is possible that the shoulder adjuster 100 only extends along a fraction of the entire length of the backrest 101.

As can be seen from Figs. 1A and 1B, the overall dimensions of the shoulder adjuster 110 can greatly vary. Hereinafter, various details with respect to the shoulder adjuster 110 are explained; it should be understood that the various kinds and types of shoulder adjusters 110 can be readily adapted to different dimensions as explained above with respect to Figs. 1A and 1B.

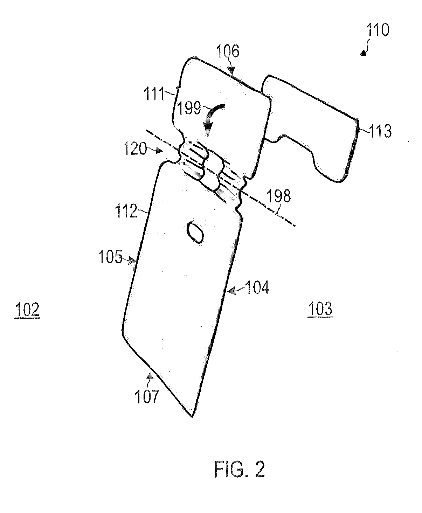

In Fig. 2, various details with respect to a first support structure 111 and a second support structure 112 of the shoulder adjuster 110 are illustrated. In the scenario of Fig. 2, the first support structure 111 implements a shoulder support plate. The first support structure 111 is plate-shaped. In the scenario of Fig. 2, the second support structure 112 implements a lumbar support plate. The second support structure 112 is plate-shaped, as well. E.g., the first support structure 111 and the second support structure 112 can be implemented by plastic baskets or plastic boards.

In the example of Fig. 2, the first support structure 111 is shown as a contiguous element for illustrative purposes. However, generally, the first support structure 111 may take various forms. E.g., it is possible that the first support structure 111 comprises a plurality of parts that are attached to each other, i.e., is made from more than one piece. E.g., it is possible that the first support structure 111 is vertically subdivided into a plurality of parts.

In the example of Fig. 2, the second support structure 112 is shown as a contiguous element. However, the second support structure 112 may take various forms. E.g., it is possible that the second support structure 112 comprises a plurality of parts that are attached to each other, i.e., is made from more than one piece. E.g., it is possible that the second support structure 112 is vertically subdivided into a plurality of parts.

The first support structure 111 is connected with the second support structure 112 via a pivot element implemented by an inflection portion 120. The inflection portion 120 is configured to enable tilting 199 of the first support structure 111 with respect to the second support structure 112. The inflection portion 120 is disposed in between the first support structure 111 and the second support structure 112.

By means of a side element (not shown in Fig. 2), both, the second support structure 112 and a stop structure 113 are fixedly arranged with respect to the backrest 101 of the seat 100. The first support structure 111 is movable with respect to the backrest 101 of the seat 100; in particular, the first support structure 111 can be tilted by means of the inflection portion 120 with respect to the backrest 101 of the seat 100 and, therefore, with respect to the second support structure 112.

The tilting 199 is with respect to a tilt axis 198 (shown by the dashed line in Fig. 2). In the example of Fig. 2, the tilt axis 198 is aligned in the left-right direction. In a rest position, the first support structure 111 is aligned with the second support structure 112. In a tilt position, the first support structure 111 is not aligned, but encloses a tilt angle with the second support structure 112. I.e., in the tilt position (not shown in Fig. 2), the first support structure 111 projects towards the front side 102 of the seat 100 and of the shoulder adjuster 110. Thus, the first support structure 111 acts as a flap that can be tilted to project in front of the second support structure 112. By this tilting, it is possible to provide the ergonomic shape of the shoulder adjuster.

The stop structure 113 being plate-shaped is provided adjacent to the first support structure 111 in the direction towards the back side 103. The stop structure 113 is configured to limit the tilting 199 of the first support structure 111 with respect to the second support structure 112. In particular, the stop structure 113 prevents tilting 199 of the first support structure 111 around the tilt axis 198 towards the back side 103 of the seat 100 and the shoulder adjuster 110.

The inflection portion 120 has flexibility which enables the tilting 199. The flexibility of the inflection portion 120 can be shape-induced and/or material-induced. In the example of Fig. 2, the inflection portion 120 is implemented by two bridges that have a corrugated surface and are made of thin plastic having elasticity. A first end of each one of the two bridges is attached to the first support structure 111, while a second end of each one of the two flexible bridges is attached to the second support structure 112.

When tilting 199 the first support structure 111 with respect to the second support structure 112, the inflection portion 120 deforms and adapts a curved form. It is possible that the tilt axis 198 is not sharply defined due to the deformation of the entire inflection portion 120. Because of the corrugated surface and the thin bridges having small dimensions, deformation of the inflection portion 120 requires only comparably small forces. Thereby, the tilting 199 is facilitated by shape-induced flexibility. The tilting 199 is further facilitated by the elasticity of the plastic material of the inflection portion 120. Thus, the flexibility of the inflection portion 120 in the example of Fig. 2 is, both, shape-induced and material-induced.

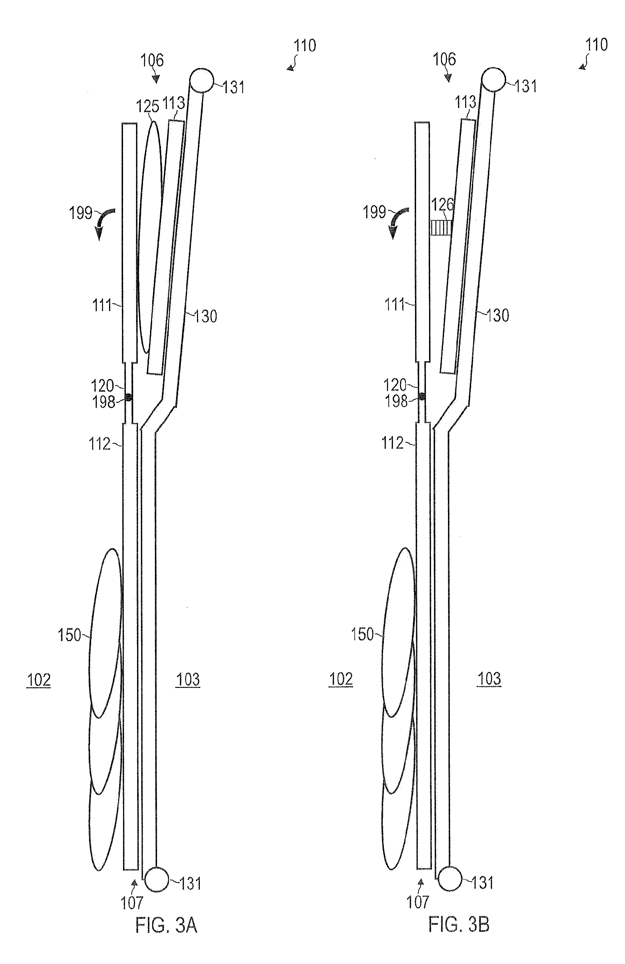

Turning to Fig. 3A, aspects of the shape-induced flexibility of the inflection portion 120 are further illustrated. As can be seen from Fig. 3A, a thickness of the inflection portion 120 is smaller than a thickness of the adjacent plates forming the first support structure 111 and the second support structure 112. Thereby, while, both, the first support structure 111 and the second support structure 112 can have a sufficient rigidity, flexibility of the inflection portion 120 can be preserved to enable the tilting 199.

Further, as can be seen from Fig. 3A, it is possible that the first support structure 111, the second support structure 112, and the inflection portion 120 are integrally formed. For example, it is possible that the first support structure 111, the second support structure 112, and the inflection portion 120 are integrally formed in a single injection mold process. However, generally, it is also possible that the first support structure 111, the second support structure 112, and the inflection portion 120 are separate pieces. E.g., it is possible that the first support structure 111, the second support structure 112, and the inflection portion 120 are made of different materials.

In Fig. 3A, furthermore, aspects of an actuation element implemented by a pneumatic bladder 125 disposed in between the first support structure 111 and the stop structure 113 are illustrated. Gas can be filled into the pneumatic bladder 125 such that the pneumatic bladder 125 increases in size. This causes a movement of the first support structure 111 towards the front side 102; thereby, the tilting 199 around the tilt axis 198 (oriented perpendicular to the drawing plane of Fig. 3A) is actuated. When gas is released from the pneumatic bladder 125, the pneumatic bladder 125 contracts; thereby, the first support structure 111 tilts backwards towards its rest position (as illustrated in Fig. 3A). By incrementally changing an amount of gas, e.g., air, in the pneumatic bladder, it is possible to continuously adjust the tilting 199 by continuously actuating the fast support structure 111. Generally, the pneumatic bladder 125 may be attached to the first support structure 111 and / or the second support structure 112.

To support the movement of the first support structure 111 back towards its rest position, it is possible to provide a resilient element (not shown in Fig. 3A) which exerts a force on the first support structure 111 the force being directed towards its rest position.

To fill the gas into the pneumatic bladder 125, it is possible to provide a manually operable or electrically operable pump (not shown in Fig. 3). In order to release the gas from the pneumatic bladder 125, it is possible to provide a manually operable or electrically operable venting valve (not shown in Fig. 3).

In Fig. 3A, furthermore, aspects of mounting the shoulder adjuster 110 to the backrest 101 of the seat 100 are illustrated. In particular, the shoulder adjuster 110 comprises the side element 130 extending in the up-down direction and comprising two fixation points 131 that are configured to fixedly couple the shoulder adjuster 110 to the backrest 101. E.g., it is possible that the side element 130 is implemented by a guide wire. As can be seen from Fig. 3A, both, the second support structure 112 and the stop structure 113 are fixedly coupled to the side element 130: thereby, relative movement of the first support structure 111 by said tilting 199 with respect to the second support structure 112, the stop structure 113, and the backrest 101 of the seat 100 can be achieved. Also the pneumatic bladder 125 is fixedly coupled with the side element 130 via the stop structure 113.

As can be seen from Fig. 3A, a lumbar support device 150 comprising a plurality of pneumatic bladders is attached to the second support structure 112. Because the second support structure 112 is arranged in a region of the backrest 101 configured to be in contact with a spine region of the back of the user, by means of the lumbar support device, lordosis support can be provided. Different implementations of the lumbar support device 150 are conceivable; some implementations may rely on mechanical solutions only and may not require the pneumatic bladders.

In Fig. 3B, aspects of the actuation element being implemented by an electromechanical actuator 126 are illustrated. In particular, as can be seen from a comparison of the Figs. 3A and 3B, the pneumatic bladder 125 may be replaced by the electromechanical actuator 126. E.g., the electromechanical actuator 126 may comprise a in electrical motor and a movable element that can be continuously driven by the electrical motor. The movable element can push the first support structure 111 out of the rest position in the direction towards the front side 102; and/or pull the first support structure 111 into the rest position. Thereby, the tilting 199 is achieved. E.g., said pushing and/or pulling may be incremental such that continuous adjustment of the tilt angle is possible.

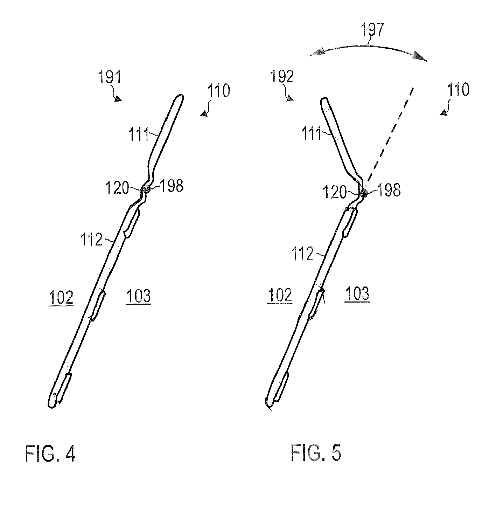

Fig. 4 illustrates the shoulder adjuster 110 in the rest position 191. As can be seen, the first support structure 111 and the second support structure 112 are aligned. In particular, the first support structure 111 does not project from a plane defined by the second support structure 112 towards the front side 102. Here, a flat and even seating surface of the backrest 101 may be obtained.

Fig. 5 illustrates the shoulder adjuster 110 in the tilt position 192. As can be seen, the first support structure 111 and the second support structure 112 are not aligned. In particular, the first support structure 111 projects from a plane defined by the second support structure 112 towards the front side 102. The first support structure 111 and the second support structure 112 enclose a tilt angle 197. The tilt angle 197 may be continuously adjusted. Here, an ergonomically shaped seating surface of the headrest 101 may be obtained.

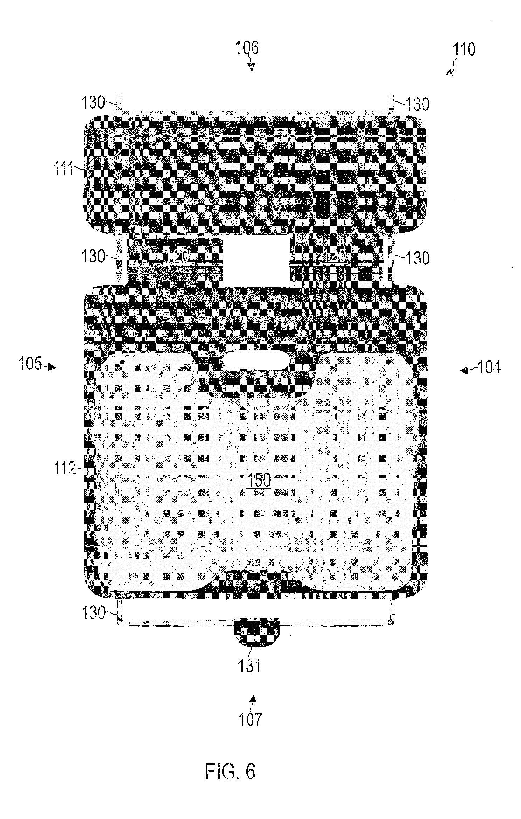

Fig. 6 illustrates aspects of the side element 130. In particular, as can be seen from Fig. 6, the guide wire implementing the side element 130 may extend, both, in the left-right direction and the up-down direction.

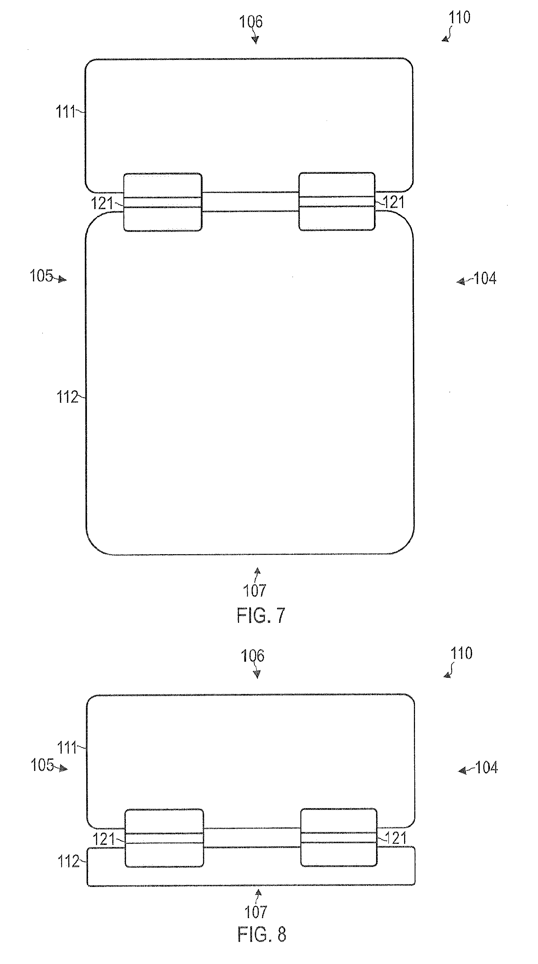

Fig. 7 illustrates aspects of the pivot element. In particular, in the example of Fig. 7, the pivot element is implemented by two hinges 121 disposed in between the first support structure 111 and the second support structure 112. E.g., it is possible that the two hinges are made of a comparably rigid material that does not provide elasticity or material-induced flexibility. E.g., it is possible that the two hinges 121 are made of metal.

While with respect to the preceding Figs., reference has been primarily made to plate-shaped first and second support structures 111, 112, it should be understood that, generally, the first and second support structures 111, 112 may be of different shape. E.g., making reference to the example of Fig. 8, it is possible that the second support structure 112 is rod-shaped. It is possible that, e.g., the first support structure 111 and / or the second support structure 112 comprise a plurality of pieces that are attached to one another; i.e., it is possible that the first support structure 111 and / or the second support structure 112 are not made form a single piece.

Generally, it is possible that the tilt functionality of the first support structure 111 with respect to the second support structure 112 is supplemented by additional displacement functionality. E.g., it is possible that the shoulder adjuster 110 further comprises a translational element configured to enable translational movement of the first support structure 111 with respect to the second support structure 112. E.g., the translation element may comprise at least one guide member and an adjusting member connected to the at least one guide member, the adjusting member being displaceable along the at least one guide member in order to enable the translational movement of the first support structure 111 with respect to the second support structure 112. E.g., it is possible that the translational element is disposed at least partly in between the first support structure 111 and the second support structure 112. E.g., it is possible that the at least one guide element is fixedly coupled to either the first support structure 111 or the second support structure 112. It is possible that the first support structure 111 is coupled with the second support structure 112 via the adjusting member. E.g., the at least one guide member may include a pair of guide members extending substantially in parallel to each other, e,g., along the up-down direction. The adjusting member may include a cross member extending between the pair of guide members. E.g., the adjusting member may comprise an electromechanical motor. E.g., the adjusting member may comprise a rotational-to-linear conversion device such as, e.g., a spindle drive and / or a rack and pinion drive. Then, a rotational movement of the electromechanical motor can be translated into the translational movement of the first support structure 111 with respect to the second support structure 112. In some embodiments, it is possible that the pivot element 120, 121 and the translational element are share components. In some embodiments, it is possible that at least one guide element is at least partially implemented by the side element of the backrest of the seat. In some embodiments, it is possible that the pivot element 120, 121 and the translational element are implemented by separate components.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

## Claims

1. A shoulder adjuster (110) for mounting in a backrest (101) of a seat (100), comprising:
- a first support structure (111),
- a second support structure (112), and
- a pivot element (120, 121) configured to enable tilting of the first support structure (111) with respect to the second support structure (112).

2. The shoulder adjuster (110) of claim 1,
wherein the pivot element (120, 121) comprises an inflection portion (120) disposed in between the first support structure (111) and the second support structure (112).

3. The shoulder adjuster (110) of claim 2,
wherein the inflection portion (120) comprises one or more bridges,
wherein a first end of each one of the one or more bridges is attached to the first support structure (111) having a plate shape,
wherein a second end of each one of the one or more flexible bridges is attached to the second support structure (112) having a plate shape.

4. The shoulder adjuster (100) of claims 2 or 3,
wherein the inflection portion (120) is made of an elastic material and is configured to enable the tilting by flexible deformation of the elastic material.

5. The shoulder adjuster (110) of any one of claims 2 - 4,
wherein the inflection portion (120) is made of plastic.

6. The shoulder adjuster (110) of any one of claims 2 - 5,
wherein the first support structure (111), the second support structure (112), and the inflection portion (120) are integrally formed.

7. The shoulder adjuster (110) of any one of the preceding claims,
wherein the pivot element (120, 121) comprises a hinge (121).

8. The shoulder adjuster (110) of any one of the preceding claims, further comprising:
- an actuation element (125, 126) configured to cause the tilting of the first support structure (111) with respect to the second support structure (112) by actuating the first support structure (111).

9. The shoulder adjuster (110) of claim 8,
wherein the actuation element (125, 126) comprises a pneumatic bladder (125).

10. The shoulder adjuster (110) of claims 8 or 9,
wherein the actuation element (125, 126) comprises an electromechanical actuator (126).

11. The shoulder adjuster (110) of any one of the preceding claims, further comprising:
- a side element (130) fixedly coupled to the second support structure (111) and configured to fixedly couple the shoulder adjuster (110) to the backrest (101) at one or more fixation points (131).

12. The shoulder adjuster (110) of any one of the preceding claims, further comprising:
- a stop structure (113) configured to limit the tilting of the first support structure (111) with respect to the second support structure (112).

13. The shoulder adjuster (110) of claims 11 and 12, and of any one of claims 8 - 10,
wherein the actuation element (125, 126) and the stop structure (113) are fixedly coupled to the side element (130).

14. The shoulder adjuster (110) of any one of the preceding claims, further comprising:
- a lumbar support device (150) attached to the second support structure (112).

15. The shoulder adjuster (110) of any one of the preceding claims, further comprising:
- a translational element configured to enable translational movement of the first support structure (111) with respect to the second support structure (112).
